(19) Europäisches Patentamt
European Patent Office
Office européen des brevets

(11) **EP 4 269 661 A1**

(12) **EUROPEAN PATENT APPLICATION**
published in accordance with Art. 153(4) EPC

(43) Date of publication:
**01.11.2023 Bulletin 2023/44**

(21) Application number: **20966181.8**

(22) Date of filing: **24.12.2020**

(51) International Patent Classification (IPC):
**C25D 5/30** (2006.01)     **B23K 26/211** (2014.01)
**B23K 26/322** (2014.01)     **B23K 26/323** (2014.01)

(52) Cooperative Patent Classification (CPC):
**B23K 26/211; B23K 26/322; B23K 26/323; C25D 5/42**

(86) International application number:
**PCT/JP2020/048483**

(87) International publication number:
**WO 2022/137444 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NISSAN MOTOR CO., LTD.**
**Kanagawa 221-0023 (JP)**

(72) Inventor: **SAKURADA, Kento**
**Atsugi-shi, Kanagawa 243-0123 (JP)**

(74) Representative: **Grünecker Patent- und Rechtsanwälte**
**PartG mbB**
**Leopoldstraße 4**
**80802 München (DE)**

(54) **LASER WELDING-USE ALUMINUM ALLOY MEMBER**

(57)     Provided is an aluminum alloy member for use in laser welding for firmly joining an aluminum alloy and copper, which are materials of different types, by laser welding.

The object of the present invention is accomplished by an aluminum alloy member for use in laser welding that includes a nickel plating layer on an aluminum alloy and in which an arithmetic average roughness Sa of a surface of the nickel plating layer is greater than or equal to 100 nm.

FIG.3A

EP 4 269 661 A1

EP 4 269 661 A1

FIG.3C

FIG.3B

FIG.3D

2

**Description**

**TECHNICAL FIELD**

The present invention relates to an aluminum alloy member for use in laser welding and a welded structure of a metal member using the same. In the present specification and claims, it is assumed that an alloy of a certain metal species M also encompasses pure metal M. For example, an aluminum alloy encompasses pure aluminum (aluminum having a purity of 99.00% or more) defined by JIS. A copper alloy encompasses pure copper (copper having a purity of 99.90% or more) defined by JIS.

**BACKGROUND ART**

As a bus bar for connecting a positive electrode tab (aluminum alloy) and a negative electrode tab (copper) of a battery, a clad material obtained by pressure-welding an aluminum (also referred to as Al) alloy and copper (also referred to as Cu) together has been used. Since the clad material is of the same type of metal as each electrode tab, laser welding is easily performed, but for the purpose of cost reduction, a method for welding a positive electrode tab and a negative electrode tab with a bus bar made of an aluminum alloy has been proposed (see, for example, Patent Literature 1).

Citation List

Patent Literatures

Patent Literature 1: JP 2019-514694 A

**SUMMARY OF INVENTION**

Technical Problem

It has been found, however, that the welding method disclosed in Patent Literature 1 has difficulty in performing laser welding because the negative electrode tab (copper) and the aluminum alloy bus bar are materials of different types. Specifically, the aluminum alloy and the copper are not melted and mixed, and sufficient strength is not obtained. It has been further found that a large member such as a bus bar has difficulty in being melted and mixed because a gap is formed, due to material tolerance, between their respective facing surfaces of the aluminum alloy member and the copper member (negative electrode tab) at a portion to be welded.
It is therefore an object of the present invention to provide an aluminum alloy member for use in laser welding for firmly joining an aluminum alloy and copper, which are materials of different types, by laser welding.

Solution to Problem

An aluminum alloy member for use in laser welding according to the present invention includes a nickel plating layer formed on an aluminum alloy, and an arithmetic average roughness Sa of a surface of the nickel plating layer is greater than or equal to 100 nm.

**Advantageous Effects of Invention**

According to the present invention, nickel (also referred to as Ni) is higher in laser absorptivity than aluminum in a base member to be irradiated with a laser and can increase the absorptivity with a roughened surface as compared with a smooth surface. It is therefore possible to efficiently melt and mix the aluminum alloy and a metal of a different type other than the aluminum alloy and obtain a strong joint structure.

**BRIEF DESCRIPTION OF DRAWINGS**

Fig. 1 is a diagram schematically illustrating a state where, in an aluminum alloy member for use in laser welding in the related art, a material temperature is increased by laser irradiation, and excessive energy is input into the alloy member.

Fig. 2 is a diagram schematically illustrating a state where, in an aluminum alloy member for use in laser welding of the present invention, roughening a surface of a nickel plating layer causes most of incident light and reflected light to be absorbed into the plating layer by laser irradiation.

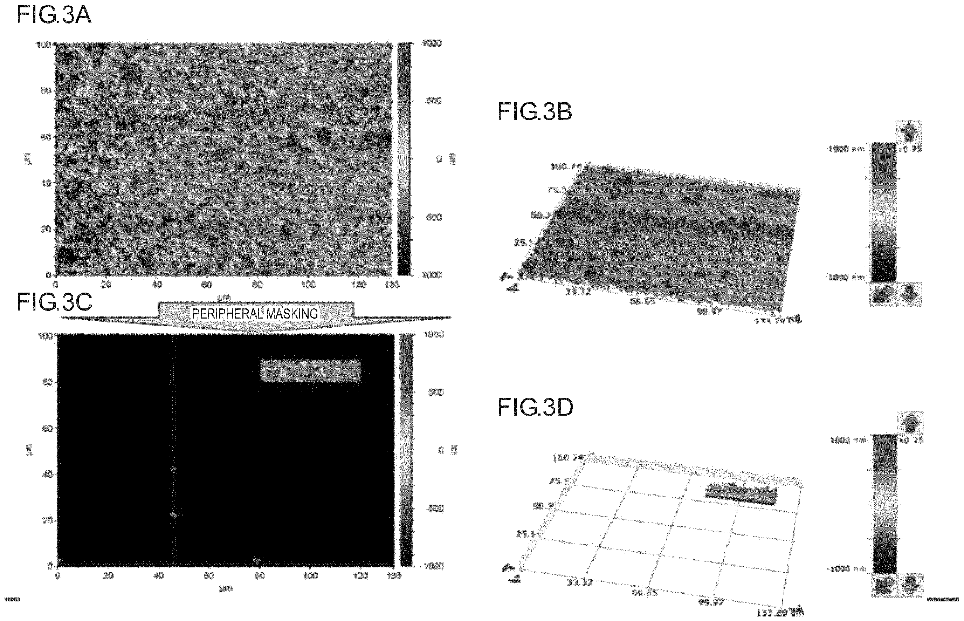

Fig. 3 is a diagram schematically illustrating a state where an arithmetic average roughness Sa of the surface of the nickel plating layer of the aluminum alloy member for use in laser welding of the present invention is measured using a light interference microscope. Figs. 3A and 3B are diagrams each illustrating, as a black-and-white image, a color image (two-dimensional image and three-dimensional image) in which the roughness of the surface of the plating layer is expressed by a difference in hue (color and tone) (lower side: purple -> blue -> green -> yellow -> higher side: red). Figs. 3C and 3D are diagrams each illustrating, as a black-and-white image, a color image (two-dimensional image and three-dimensional image) of each portion corresponding to any area of 20 $\mu$m * 40 um cut out by masking the above-described color image (two-dimensional image and three-dimensional image).

Fig. 4 is a diagram illustrating a state where a film thickness of the nickel plating layer of the aluminum alloy member for use in laser welding of the present invention is measured using a field emission scanning electron microscope (FE-SEM).

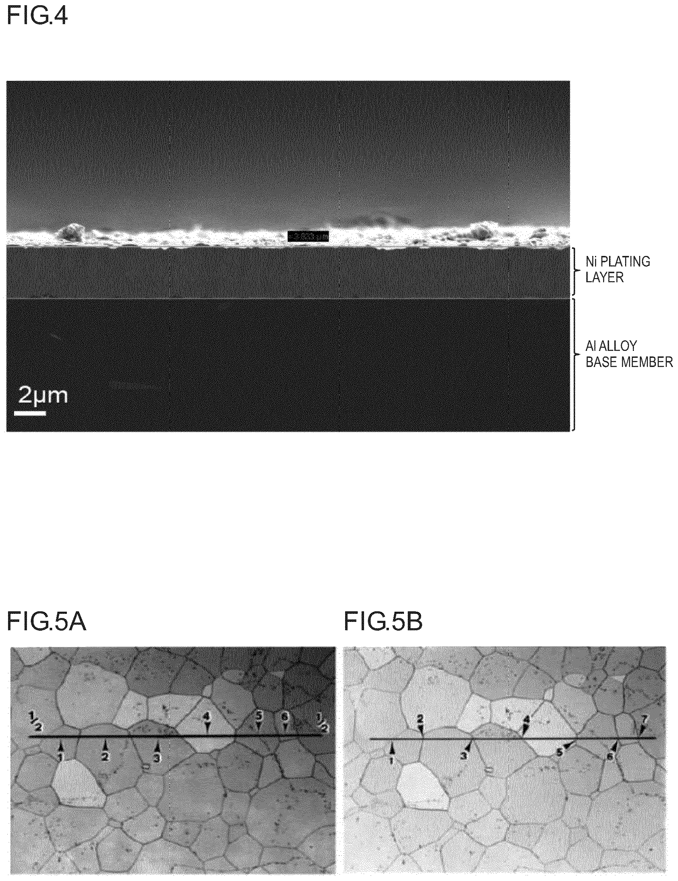

Fig. 5 is a diagram illustrating a state where a grain size of nickel grains in the nickel plating layer of the aluminum alloy member for use in laser welding of the present invention is measured using the field emission scanning electron microscope (FE-SEM). Figs. 5A and 5B are diagrams each illustrating a photomicrograph shown in JIS G0551:2020 "Steels-Micrographic determination of the apparent grain size", Fig. 5A is a diagram illustrating the number of counted crystal grains traversed by a line segment, and Fig. 5B is a diagram illustrating the number of counted crystal grain boundaries traversed by the line segment.

Fig. 6 is a diagram illustrating a state where a degree of luster of the nickel plating layer of the aluminum alloy member for use in laser welding of the present invention is measured using a densitometer.

Fig. 7 is a diagram schematically illustrating a state where the aluminum alloy member for use in laser welding and a metal member different from the aluminum alloy are melted and mixed, and then solidified to form a welded portion.

Fig. 8 is a diagram schematically illustrating a state where strength (tensile stress) of a welded structure of a metal member is measured.

## DESCRIPTION OF EMBODIMENTS

Hereinafter, embodiments of the present invention will be described with reference to the accompanying drawings. Note that, in the description of the drawings, the same elements are denoted by the same reference numerals, and no redundant description will be given. Further, dimensional ratios of the drawings are exaggerated for convenience of description, and may be different from actual ratios.

<Aluminum alloy member for use in laser welding; first embodiment>

An embodiment (first embodiment) of an aluminum alloy member for use in laser welding according to the present invention includes a nickel plating layer on an aluminum alloy, and an arithmetic average roughness Sa of a surface of the nickel plating layer is greater than or equal to 100 nm. With such a configuration, the above-described effects can be effectively obtained.

The reason why the above-described effects are obtained by the aluminum alloy member for use in laser welding of the present embodiment is not clear in detail, but the following action mechanism (mode of action) is conceivable. Note that the following action mechanism is based on a presumption, and the present embodiment is not limited to the following action mechanism at all.

For example, in order to weld metals of different types such as Al-Cu, thermal energy for heating the materials to a melting point is required. An intermetallic compound generated by reactions of the metals of different types, however, is brittle, so that there is a problem that when excessive energy is input, welding strength decreases, electrical resistance increases, and an electrical connection becomes poor in quality. Note that, for example, when Al and Cu are welded as the metals of the different types, AlCu, $Al_2Cu$, and $Al_4Cu_9$ are intermetallic compounds of Al and Cu mainly produced.

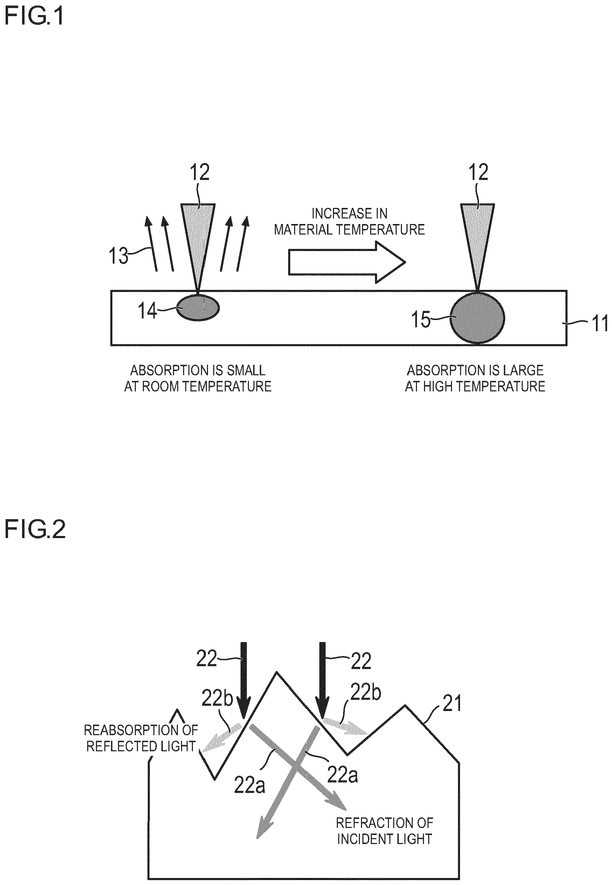

Further, as illustrated in Fig. 1, in a case of using an aluminum alloy 11 that is a material small in absorptivity such as an already available aluminum alloy member for use in laser welding, laser irradiation 12 causes surface reflection 13 at a welding start point, allowing intended energy 14 to be input. The aluminum alloy 11, however, has a problem that when a material temperature increases during welding, the laser absorptivity increases, and excessive energy 15 greater than or equal to a target value is input.

In view of the above-described problem, according to the present embodiment, nickel of the nickel plating layer is a material that absorbs surface energy, nickel is higher in laser absorptivity than aluminum of a base member to be irradiated with a laser, and the surface of the nickel plating layer is roughened, so that the absorptivity can be increased as compared with a smooth surface. That is, as illustrated in Fig. 2, when a surface 21 of the nickel plating layer is roughened and the roughened surface 21 is irradiated with laser light 22, incident light 22a is refracted by the surface and absorbed into the nickel plating layer, reflected light 22b is also reabsorbed into the nickel plating layer, so that most of the incident light 22a and most of the reflected light 22b are absorbed. On the other hand, in a smooth surface (not illustrated), even when the surface is irradiated with a laser, incident light is absorbed through the surface into the nickel plating layer, but reflected light is reflected off the surface of the nickel plating layer in a direction opposite to an incident (irradiation) direction (toward a light source) and is hardly reabsorbed into the nickel plating layer. Therefore, roughening the surface of the nickel plating layer allows an increase in the absorptivity as compared with the smooth surface. It is therefore considered that it is possible to efficiently melt and mix an aluminum alloy and a metal of a different type (negative electrode tab or the like) such as copper other than the aluminum alloy and obtain a strong joint structure.

Hereinafter, the aluminum alloy member for use in laser welding of the present embodiment (hereinafter, also simply referred to as an aluminum alloy member) will be described for each configuration requirement.

[Base member]

(Material of base member)

It is sufficient that the base member of the aluminum alloy member of the present embodiment be made of an aluminum alloy. That is, although a melting point slightly changes in a manner that depends on an additive due to an effect of increasing energy absorptivity by plating, all types of alloys can receive the effect. Therefore, an alloy having low weldability is also included. In general, an international aluminum alloy name is used for the aluminum alloy, and also in JIS (Japanese Industrial Standards), an international aluminum alloy name including a four-digit number is applied to a part of the name of the aluminum alloy. Mixed materials are different for each No. 1000, so that it is possible to determine what kind of materials an alloy contains by the number. Examples of the above-described aluminum alloy include A1050-H24, A1100-O, A1100-H24, A2011-T3, A2011-T8, A2017-T4, A2024-T3, A2024-T4, A2024-T6, A2024-T81, A5052-O, A5052-H34, A5052-H112, A5056-H34, A5056-H112, A5083-O, A6061-T6, A6061-T651, A6063-T5, A6082-T6, A6101-T6, A7075-T651, and the like, but the aluminum alloy is not limited to such examples. In each of the aluminum alloys, A at the head represents aluminum, a four-digit number following A represents a material designation, and a symbol after a slash represents a temper designation. Note that the melting point of the aluminum alloy itself of the base member hardly changes in a manner that depends on the type (component) of the base member. Therefore, the type (6101, 1100, or the like) of the aluminum alloy of the base member does not affect the melting of the base member and the metal member of a different type to be joined to the base member with the energy absorbed by the nickel (plating layer). Therefore, the type (component) of the aluminum alloy of the base member may be appropriately selected in accordance with required performance for each application other than melting properties (melting point), for example, vibration and impact resistance performance.

(Material, shape, and size of base member)

Regarding the material, shape, and size of the above-described base member, a member identical in material, shape, and size to an already available aluminum alloy member for use in laser welding can be applied as it is. That is, a structural member using the already available aluminum alloy member as the base member and having a nickel plating layer subjected to surface roughening (arithmetic average roughness Sa is greater than or equal to 100 nm) on the base member can be used as the aluminum alloy member for use in laser welding of the present embodiment. Note that the base member of the present embodiment may be identical in material, shape, and size as the already available aluminum alloy member for use in laser welding, but may be different in at least any one of material, shape, or size from the viewpoint of weight reduction or the like.

(Shape of aluminum alloy of base member)

Regarding the shape of the aluminum alloy of the base member, a member identical in shape as the already available aluminum alloy member for use in laser welding can be applied as it is, and in this case, a flat plate shape is common.

(Thickness of aluminum alloy of base member)

Regarding the size of the aluminum alloy of the base member, a member identical in size as the already available aluminum alloy member for use in laser welding can be applied as it is. In a case where the aluminum alloy of the base member is as thick as a flat plate shape or the like, the thickness of the aluminum alloy preferably falls within a range of 0.2 mm or greater and 1 mm or less. It is preferable that the thickness of the aluminum alloy be greater than or equal to 0.2 mm from the viewpoint that tolerance with respect to a mating member can be sufficiently absorbed at the time of welding. On the other hand, it is preferable that the thickness of the aluminum alloy be less than or equal to 1 mm from the viewpoint that the aluminum alloy is easily melted by the absorbed energy, and in addition, the aluminum alloy can be made light and low in cost.

[Nickel plating layer]

(Placement position of nickel plating layer)

The nickel plating layer of the aluminum alloy member is provided on the aluminum alloy of the above-described base member. Specifically, the nickel plating layer is provided on one surface of the aluminum alloy of the above-described base member. With such a member structure, the nickel plating layer is placed to serve as a base member surface side opposite from the welded portion where the base member and the metal member different from the base member are melted and solidified at the time of welding, thereby allowing the following effects to be effectively obtained. That is, nickel, which is a component of the nickel plating layer, is a material that absorbs surface energy, and nickel can be higher in laser absorptivity than aluminum, which is a component of the base member to be irradiated with a laser. Further, the nickel plating layer may be provided at least on a surface portion opposite from the welded portion. For example, the nickel plating layer may be provided on the surface portion opposite from the welded portion and the vicinity of the surface portion (for example, a range from an outer edge of the surface portion opposite from the welded portion to the outside by about 5 to 10 mm) in the base member surface on a side opposite from the welded portion. The nickel plating layer may be provided on a wider range, and the widest range corresponds to the entirety of the base member surface on the side opposite from the welded portion. It is preferable that the nickel plating layer be provided on the entirety of the base member surface on the side opposite from the welded portion from the viewpoint of easiness of formation of the nickel plating layer, and further, from the viewpoint that strict alignment between members need not be performed at the time of welding (allowing a certain degree of misalignment). Note that, in order to form a member structure having the nickel plating layer on a part of the base member surface opposite from the welded portion, for example, a removable insulating film is attached to a surface portion on which no nickel plating layer is provided to cover the surface portion before plating treatment. The method includes, but is not limited to, a method in which the base member partially covered with the insulating film is subjected to plating treatment, and then the insulating film is removed from the base member. Further, the nickel plating layer is provided on one surface of the aluminum alloy of the above-described base member, and it is preferable that nothing be provided on the other surface of the aluminum alloy of the above-described base member. It is therefore possible to employ a method in which the removable insulating film is attached to the entirety of the other surface of the aluminum alloy before plating treatment to cover the other surface, the base member covered with the insulating film is subjected to plating treatment, and then the insulating film is removed from the base member, or the like.

(Arithmetic average roughness Sa of surface of nickel plating layer)

The arithmetic average roughness Sa of the surface of the nickel plating layer is greater than or equal to 100 nm. With such a configuration, it is possible to increase the energy absorptivity (laser absorptivity) of the surface and to suppress, by preventing energy more than necessary from being input, the occurrence of a brittle intermetallic compound generated by reactions of metals of different types caused by the input of excessive energy. This makes it possible to prevent the welded portion from becoming brittle (reduction in strength) of and increase (stabilize) the welding strength. Further, the greater the arithmetic average roughness Sa of the surface, the higher the energy absorptivity of the surface, so that the arithmetic average roughness Sa of the surface is preferably greater than or equal to 185 nm. Such a configuration has a range of Sa that further increases the absorptivity, so that it is possible to perform welding even with the input of less energy. That is, the energy absorptivity (laser absorptivity) of the surface becomes higher, and welding can be performed even with the input of less energy, so that it is possible to further suppress the generation of the intermetallic compound and further increase (stabilize ) the welding strength. Further, the upper limit of the arithmetic average roughness Sa of the surface is preferably less than or equal to 500 nm, more preferably less than or equal to 300 nm, and still more preferably less than or equal to 250 nm. This is because although the aluminum alloy base member of the alloy member melts to penetrate the metal member of a different type (copper or the like) due to energy absorption, the film thickness of the nickel plating layer needs to increase in order to coarsen (increase) the arithmetic average roughness Sa. However, when the arithmetic average roughness Sa is less than or equal to the upper limit value (500 nm), it is possible to effectively prevent energy from being accumulated only in nickel (plating layer) (prevent the volume of nickel (plating layer) that absorbs energy from being increased). It is therefore possible to prevent energy more than necessary from being input, suppress the generation of the intermetallic compound, and increase (stabilize) the welding strength.

(Method for measuring arithmetic average roughness Sa of surface of nickel plating layer)

The arithmetic average roughness Sa of the surface of the nickel plating layer can be measured and calculated by the following method.

The roughness of the surface of the plating layer is observed (measured) using a 115x lens of a light interference microscope manufactured by Bruker Corporation to obtain an image of the surface roughness. Specifically, the roughness (uneven state) of the surface of the plating layer is measured using the above-described light interference microscope, and a color image (two-dimensional image and three-dimensional image) in which the roughness (uneven state) of the surface of the plating layer is expressed by a difference in hue (color and tone) (lower side: purple -> blue -> green -> yellow -> higher side: red) is obtained. Figs. 3A and 3B illustrate such color images as black-and-white images. For the color images, in order to eliminate the influence of undulation, Sa (arithmetic average roughness of the surface) is measured at three portions each corresponding to any area of 20 $\mu$m * 40 um cut out by masking, and an average is calculated. Such an average value is defined as the arithmetic average roughness Sa of the surface of the nickel plating layer. Fig. 3C and Fig. 3D illustrate, as black-and-white images, color images (two-dimensional image and three-dimensional image) of each portion corresponding to any area of 20 $\mu$m * 40 um cut out by masking. Note that, in the above description, an example where the light interference microscope manufactured by Bruker Corporation is used has been described, but, according to the present embodiment, the light interference microscope is not limited to the light interference microscope manufactured by Bruker Corporation. That is, it is possible to appropriately use a light interference microscope equipped with an image analysis device or the like in which software capable of measuring the above-described surface roughness and analyzing the arithmetic average roughness Sa of an image of any area of 20 $\mu$m * 40 um cut out by masking.

(Film thickness of nickel plating layer)

The film thickness of the nickel plating layer is preferably greater than or equal to 3 um, and more preferably greater than or equal to 5 um. This is because the greater the film thickness of the nickel plating layer, the coarser surface roughness of a surface layer = plating grain size (grain size of nickel grains), thereby making it possible to easily obtain the effect of increasing laser absorptivity by surface roughening. Such an effect of increasing laser absorptivity increases (stabilizes) welding strength. From such a viewpoint, the film thickness of the nickel plating layer is more preferably greater than or equal to 8 um. The film thickness of the nickel plating layer is preferably less than or equal to 16 um, and more preferably less than or equal to 14 um. The energy absorption causes the base member of the aluminum alloy member to melt to penetrate the metal member of a different type (copper) as a welding mating member, so as to allow the aluminum alloy and the metal of a different type (copper) to melt and mix and increase (stabilize) the welding strength, thereby making it possible to obtain a strong welded structure. When the film thickness of the nickel plating layer is less than or equal to the upper limit value (16 um), energy is accumulated only in nickel (plating layer), and it is possible to effectively prevent an increase in the volume of nickel (plating layer) that absorbs energy. It is therefore possible to prevent energy more than necessary from being input, suppress the generation of a brittle intermetallic compound, and increase (stabilize) the welding strength.

(Method for measuring film thickness of nickel plating layer)

The film thickness of the nickel plating layer can be measured by the following method.
A cross section of a specimen (sample) of the aluminum alloy member having its cross section processed by a cross-section polishing machine is observed using a field emission scanning electron microscope (FE-SEM) to obtain an image of the cross section. The film thickness of the nickel plating layer is measured from the image of the cross section. Specifically, as illustrated in Fig. 4, the film thickness of the nickel plating layer can be measured from the image of the cross section with a magnification of 3000 times using an image analysis device provided in the FE-SEM. Note that the surface of the nickel plating layer is counted as the minimum value during the measurement = the film thickness (the lower portions of the irregularities of the surface).

(Grain size of nickel grains in nickel plating layer)

The grain size of the nickel grains in the nickel plating layer is preferably greater than or equal to 0.5 um, and more preferably greater than or equal to 0.8 um. This is because as the grain size of the nickel grains increases to reach the above-described range, the surface roughness increases; as a result, the laser absorptivity increases, and the welding strength increases (becomes stable). Note that the upper limit of the grain size of the nickel grains in the nickel plating layer is not particularly limited, but is preferably less than or equal to 1.0 um from the viewpoint of a relation with the film thickness of the nickel plating layer.

(Method for measuring grain size of nickel grains in nickel plating layer)

The grain size of the nickel grains in the nickel plating layer can be measured by the following method.

A cross section of a specimen (sample) of the aluminum alloy member having its cross section processed by a cross-section polishing machine is observed using a field emission scanning electron microscope (FE-SEM) to obtain an image of the cross section. Specifically, a backscattered electron image with a magnification of 10,000 times is obtained. From the obtained backscattered electron image, a number P of crystal grain boundaries of nickel of the nickel plating layer is measured, and a number N of crystal grains is determined accordingly. Specifically, counting a crystal grain in which an end of a line segment is located as 1/2 as illustrated in Figs. 5A and 5B according to JIS G0551:2020 "Steels-Micrographic determination of the apparent grain size" allows the number N of nickel crystal grains to be regarded as the number N of crystal grains $\approx$ the number P of crystal grain boundaries. Figs. 5A and 5B are diagrams each illustrating a photomicrograph, Fig. 5A is a diagram illustrating the number of counted crystal grains traversed by the line segment, and Fig. 5B is a diagram illustrating the number of counted crystal grain boundaries traversed by the line segment. As described above, the number of crystal grains traversed by the line segment can be regarded as the number P of crystal grain boundaries measured from the backscattered electron image. Next, the average crystal grain size is calculated by the intercept method (cutting method) described in Takayama (1994) "Methods for estimation and determination of grain size" Journal of Japan Institute of Light Metals, 44, p.48. Specifically, a line segment having a total length L is drawn on the cross section (backscattered electron image) of the target specimen (sample) by the intercept method (cutting method), and the average crystal grain size $l_{ave}$ is determined from the following formula (1) as the number of crystal grains $n_L$ (N) traversed by the line segment $\approx$ the number P of crystal grain boundaries. The average crystal grain size $l_{ave}$ is defined as the grain size of the nickel grains in the nickel plating layer.
[Math. 1]

$$l_{ave}=L/n_L \quad (1)$$

wherein

$l_{ave}$: the average crystal grain size,
L: the total length of the line segment, and
$n_L$: the number of crystal grains traversed by the line segment.

(Degree of luster of nickel plating layer)

The degree of luster of the nickel plating layer is preferably less than or equal to 0.40, and more preferably less than or equal to 0.38. This is considered that when the degree of luster is low, light is scattered correspondingly, so that absorption in the surface increases (laser absorptivity increases). This is because the welding strength increases (becomes stable). Note that the degree of luster of the nickel plating layer is preferably as low as possible, so that the lower limit of the degree of luster is not particularly limited and is practically preferably greater than or equal to 0.2.

(Method for measuring degree of luster of nickel plating layer)

The degree of luster of the nickel plating layer can be measured by the following method.

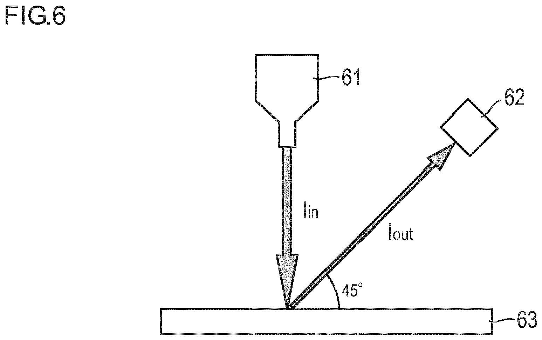

The measurement can be performed using a densitometer ND-11 manufactured by Nippon Denshoku Industries Co., Ltd. Specifically, as illustrated in Fig. 6, a light source incident angle is set at 0°, a light source 61 is a white light source having spectral characteristics of a CIE standard illuminant, and an opening angle of a light receiver 62 is set at 45°. For the measurement of the degree of luster, a portion of $\varphi$3 mm on a workpiece surface (measurement position) in a center portion of the specimen (surface of the nickel plating layer of the aluminum alloy member) 63 is measured three times, and an average value is calculated. This average value is taken as the degree of luster of the nickel plating layer. The degree of luster is calculated as Log ($I_{in}/I_{out}$) ($I_{in}$ is the intensity of irradiation light (incident light) from the light source, and $I_{out}$ is the intensity of reflected light detected by the light receiver out of light reflected off the specimen).

(Method for forming nickel plating layer)

Examples of a method for forming, on the aluminum alloy, the nickel plating layer having an arithmetic average roughness Sa greater than or equal to 100 nm include the following method. Note that the method for forming the nickel plating layer of the present embodiment is not limited to the following method, and the nickel plating layer can be formed by appropriately using an already-known dull luster nickel plating technique for roughening a surface.

The nickel plating layer of the present embodiment can be formed by electrolytic nickel plating performed under the following conditions.

<Electrolytic nickel plating conditions>

- Bath solution: sulfamic acid bath, pH 3.5 to 4.8, 445 to 645 ml/L (60% nickel sulfamate),
- Impurity; sulfur content less than or equal to 0.1 wt%, and
- Current density 2 to 10 A/dm$^2$.

The above-described sulfamic acid bath primarily includes nickel sulfamate, boric acid, and nickel chloride (or nickel bromide), is excellent in flexibility than a watt bath, can use a high current density, and has less internal stress.
The above-described sulfamic acid bath is composed of 445 to 645 ml/L (60% nickel sulfamate), boric acid of 20 to 40 g/L, and nickel chloride (or nickel bromide) of 5 to 20 g/L. For the sulfamic acid bath, plating is often performed only with the three base components, and it is preferable not to use a brightener or the like because the purpose of the present embodiment is to roughen the surface with dull luster. Note that an additive may be added as long as the actions and effects of the present embodiment are not affected. Further, a film-forming time (for example, about 3 to 20 minutes) may be appropriately determined in accordance with a target film thickness (for example, 3 to 15 um) . Further, a bath temperature (for example, about 35 to 45°C) may also be appropriately determined from a relation of the film-forming rate or the like. Note that these conditions may be conditions other than the above-described ranges as long as the nickel plating layer having the predetermined surface roughness described above can be formed by the dull luster nickel plating method. There is sensitivity to change in concentration, a change in pH, and impurities, and adjusting these allows desired surface roughness (graininess) to be obtained.

(Welding mating member of aluminum alloy member)

The aluminum alloy member is preferably welded to a member made of a copper alloy. Allowing materials of different types to be welded together leads to cost reduction. Further, allowing materials of different types to be stably welded together, the welding conventionally leading to insufficient welding strength, makes it possible to increase (stabilize) the welding strength. Note that, as a material (type of material) of the welding mating member of the aluminum alloy member, all types of metals including aluminum are effective in principle, and the material may be appropriately selected according to the intended use.
The aluminum alloy member is preferably separated from the welding mating member except for the welded portion. A gap between the aluminum alloy member and the welding mating member makes it possible to provide an escape space for the material vaporized at the time of welding, to prevent the occurrence of a blowhole, to prevent a decrease in strength, and to increase (stabilize) the welding strength. For a separation distance other than the welded portion, a thin plate (about 0.2 mm in thickness) made of iron or the like having an opening only in a portion corresponding to the welded portion can be used. In order to allow the thin plate member to be easily removed after welding, the thin plate member is preferably divided into two or more portions, that is left and right (front and back) portions, with the welded portion (opening) as a center. Further, in order to allow the divided thin plates to be easily removed, each of the divided thin plates preferably has a portion protruding from the aluminum alloy member (portion serving as a handle).

(Thickness of welding mating member)

A thickness of the welding mating member (copper plate or the like) may be appropriately determined according to the intended use (electrode tab or use other than the electrode tab).

(Surface of welding mating member)

The welding mating member (copper plate or the like) may have a nickel plating layer with luster on a portion to be welded to the aluminum alloy member as long as the actions and effects of the present invention are not impaired. It is to prevent oxidation of the surface of the welding mating member (a copper plate or the like), and nickel is less prone to oxidation than the base such as a copper plate, so that it is possible to avoid various environmental negatives.

<Welded structure of metal member; second embodiment>

An embodiment (second embodiment) of a welded structure of a metal member according to the present invention is a welded structure of a metal member including a welded portion where an aluminum alloy member for use in laser welding and a metal member different from the aluminum alloy are melted and solidified, the aluminum alloy member includes a nickel plating layer on a side opposite from the welded portion, and an arithmetic average roughness Sa of a surface of the nickel plating layer is greater than or equal to 100 nm. With such a configuration, nickel is higher in laser absorptivity than aluminum of a base member of the aluminum alloy member to be irradiated with a laser. This causes an increase in energy absorptivity of the nickel plating layer on the surface of the alloy member, so that it is possible to suppress, by preventing energy more than necessary from being input, the generation of a brittle intermetallic compound. Further, roughening the surface makes it possible to increase the absorptivity as compared with a smooth surface. It is therefore possible to efficiently melt and mix the aluminum alloy and a metal of a different type other than the aluminum alloy and increase (stabilize) the welding strength, thereby making it possible to obtain a strong welded structure.

(Aluminum alloy member)

The aluminum alloy member for use in laser welding of the first embodiment described above is applicable to the aluminum alloy member for use in laser welding of the present embodiment. Therefore, the aluminum alloy member for use in laser welding of the present embodiment is as described in the first embodiment, so that no description will be given below of the aluminum alloy member for use in laser welding to avoid the description from being redundant.
In the present embodiment, the aluminum alloy member is preferably a bus bar to be joined to an electrode tab. The use of the aluminum alloy member of the present embodiment as a bus bar makes it possible to obtain strength as necessary together with conductivity achieved by connecting electrode tabs.

(Welding mating member of aluminum alloy member; metal member different from aluminum alloy)

The metal member different from the aluminum alloy is preferably a metal member made of a copper alloy. The metal member made of a copper alloy is suitable as a member to be welded to the aluminum alloy member (bus bar), such as a negative electrode tab of a vehicle-mounted storage battery for an electric vehicle (EV) or the like, the negative electrode tab being used in automobiles and used to establish conduction.

(Material of welding mating member and the like)

As a material of the metal member different from the aluminum alloy, a copper alloy is preferable as described above.

(Mode of welded portion)

It is preferable that each of a plurality of welding mating members have the welded portion and be welded to the aluminum alloy member. Such a configuration eliminates the need for preparing a plurality of aluminum alloy members corresponding to the plurality of welding mating members, so that the number of components is reduced, cost is reduced, and component management is facilitated. Further, since it is not necessary to weld the plurality of welding mating members using the plurality of aluminum alloy members, the welding work is prevented from becoming complicated and can be easily performed, and the cost is reduced accordingly.

(Method for forming welded portion; welding method)

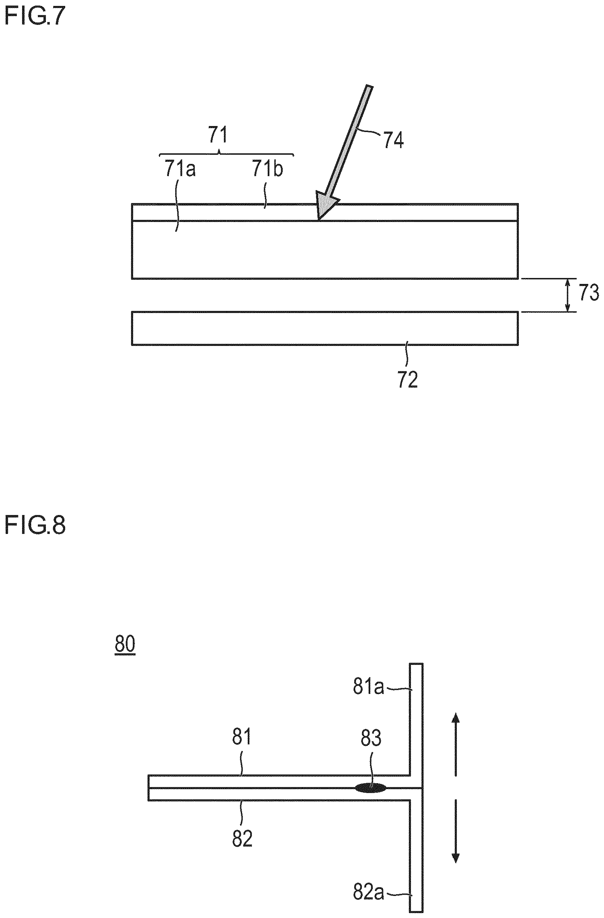

Examples of a method for forming the welded portion where the aluminum alloy member for use in laser welding and a metal member different from the aluminum alloy are melted and mixed and then solidified include, but are not limited to, the following method.
As illustrated in Fig. 7, welding is performed by irradiating a nickel plating layer 71b of an aluminum alloy member 71 serving as an upper plate with a laser 74 under the following conditions.

<Laser welding conditions>

- The nickel plating layer of the aluminum alloy member serving as the upper plate is irradiated with the laser under the following conditions,
- Laser type: YAG laser,

- Welding speed: $100 \pm 20$ mm/sec,
- The laser is Wobbling (moves in a circle), and
- The bead length is determined on the basis of a length of the portion to be welded (in examples, 21 mm * 2).

The advance of laser welding technique also contributes to a gap between materials caused by welding of an aluminum alloy (bus bar) and copper (negative electrode tab), which are materials of different types, and manufacturing variations (range of tolerance). That is, linear welding used to make heat input excessive and make welding strength low, so that the linear welding has not been effective at all, but a technique of performing wobble welding called Wobbling to melt a material while preventing excessive heat input has been developed. Therefore, for the laser welding, wobble welding called Wobbling is preferably used. In order to solve the problem of the gap between the materials of different types, Wobbling (wobble welding) is performed using the aluminum alloy member for use in laser welding of the present embodiment, thereby making it possible to melt and mix the materials of different types with lower energy while filling in the gap between the materials. As a result, a stronger joint structure can be obtained. Further, for the laser welding, a YAG laser as a laser type is preferably used. The YAG laser makes metal high in absorbability of light energy as compared with a $CO_2$ laser. Therefore, processing can be performed with less energy. As a result, a stronger joint structure can be obtained.

Examples

Hereinafter, the present embodiment will be described in detail with reference to examples, but the present invention is not limited to the following examples. Note that each of the example and comparative examples was performed, unless otherwise specified, under an atmospheric pressure, at room temperature (range of $25°C \pm 3°C$), and in a range of relative humidity of $50\% \pm 5\%$ RH.

(Examples 1 to 5 and Comparative Examples 1 to 3)

(Preparation of aluminum alloy member for use in laser welding)

As a base member of the aluminum alloy member for use in laser welding, an aluminum alloy A1100-H24 or A6101-T6 was used. A thickness of the base alloy was set at 0.6 mm, and regarding a shape, a rectangular plate material for use in measurement of the arithmetic average roughness Sa, the degree of luster, and the film thickness of the surface of the nickel plating layer, and the grain size of nickel grains on the surface of the plating layer, and a plate material (see Fig. 8) having an L-shaped cross section for use in measurement of strength (tensile stress) were used.
In Comparative Example 2, an aluminum alloy A1100-H24 of the base member was used as it was as the aluminum alloy member for use in laser welding without forming a plating film. A thickness of the alloy member was set at 0.6 mm, and regarding a shape, a plate material (see Fig. 8) having an L-shaped cross section was used for measurement of strength (tensile stress).
In Comparative Example 3, a plate-shaped aluminum alloy A6101-T6 of the base member was used as it was as the aluminum alloy member for use in laser welding without forming a plating film. A thickness of the alloy member was set at 0.6 mm, and regarding a shape, a plate material (see Fig. 8) having an L-shaped cross section was used for measurement of strength (tensile stress).
A nickel plating layer was formed on one surface of the aluminum alloy of each of the base members of Examples 1 to 5 and Comparative Example 1, and a corresponding aluminum alloy member for use in laser welding was obtained. Ni plating conditions under which the nickel plating layer is formed were as follows. Note that the other surface of the aluminum alloy of the base member was coated with a removable insulating film so as to prevent a plating film from being formed and was then subjected to plating. After the end of the plating, the insulating film was removed.

<Ni plating conditions>

- Bath solution: sulfamic acid bath,

- Component concentration in bath solution (aqueous solution); nickel sulfamate (60% nickel sulfamate) of 545 ml/L, nickel chloride of 10 g/L, boric acid of 30 g/L,

- pH of bath solution; 4.0,

- Temperature of bath solution; 40°C,

- Impurity in bath solution; sulfur content less than or equal to 0.1 wt%, and

- Current density: 3 A/dm$^2$.

Note that, for the electrolytic nickel plating with luster of Comparative Example 1, sulfur of 0.1 mass% was added as a brightener to the above-described sulfamic acid bath in addition to the above-described three components. Note that the pH and film-forming time of each of the bath solutions of Examples 1 to 5 and Comparative Example 1 were set as shown in conditions in the following Table 1.

[Table 1]

| | Type of plating material (Plating formation method) | Target film thickness of plating film (Nm) | Type of base member of Al alloy member | pH of bath solution | Current density of plating (A/dm²) | Concentration of each component in sulfamic acid bath | | | Film-forming time of plating film (min) | Temperature of bath solution (°C) |
|---|---|---|---|---|---|---|---|---|---|---|
| | | | | | | Ni chloride (g/L) | 60% Ni sulfamate (mill) | Boric acid (g/L) | | |
| Example 1 | Ni plating with dull luster | 3 | A1100-H24 | 4.0 | 3 | 10 | 545 | 30 | 3.6 | 40 |
| Example 2 | Ni plating with dull luster | 5 | A1100-H24 | 4.0 | 3 | 10 | 545 | 30 | 6 | 40 |
| Example 3 | Ni plating with dull luster | 9 | A1100-H24 | 4.0 | 3 | 10 | 545 | 30 | 10.8 | 40 |
| Example 4 | Ni plating with dull luster | 10 | A1100-H24 | 4.0 | 3 | 10 | 545 | 30 | 12 | 40 |
| Example 5 | Ni plating with dull luster | 10 | A6101-T6 | 4.0 | 3 | 10 | 545 | 30 | 12 | 40 |
| Comparative example 1 | Ni plating with luster | 5 | A1100-H24 | 4.3 | 3 | 10 | 545 | 30 | 6 | 40 |

<Measurement of arithmetic average roughness Sa of surface of nickel plating layer>

For each of the plate-shaped aluminum alloy members for use in laser welding of Examples 1 to 5 and Comparative Example 1 obtained as described above, the arithmetic average roughness Sa of the surface of the nickel plating layer was measured and calculated by the above-described method. The obtained arithmetic average roughness Sa of the surface of the nickel plating layer is shown in the following Table 2.

<Measurement of film thickness of nickel plating layer>

For each of the plate-shaped aluminum alloy members for use in laser welding of Examples 1 to 5 and Comparative Example 1 obtained as described above, the thickness of the nickel plating layer was measured by the above-described method. The obtained film thickness of the nickel plating layer is shown in the following Table 2.

<Measurement of grain size of nickel grains in nickel plating layer>

For each of the plate-shaped aluminum alloy members for use in laser welding of Examples 1 to 5 and Comparative Example 1 obtained as described above, the grain size of the nickel grains in the nickel plating layer was measured by the above-described method. The obtained grain size of the nickel grains in the nickel plating layer is shown in the following Table 2.

<Measurement of degree of luster of nickel plating layer>

For each of the plate-shaped aluminum alloy members for use in laser welding of Examples 1 to 5 and Comparative Example 1 obtained as described above, the degree of luster of the nickel plating layer was measured by the above-described method. The obtained degree of luster of the nickel plating layer is shown in the following Table 2.

(Preparation of welded structure of metal member)

With each of the plate-shaped aluminum alloy members for use in laser welding of Examples 1 to 5 and Comparative Examples 1 to 3 obtained as described above, the aluminum alloy member and a metal member different from the aluminum alloy were arranged as illustrated in Fig. 7, and laser welding was performed under the following conditions. As a result, a welded structure of a plate-shaped metal member including a welded portion where the aluminum alloy member and the metal member different from the aluminum alloy are melted and solidified was obtained.

Specifically, pure copper (oxygen-free copper) C1020-O was used as the metal member different from the aluminum alloy. A thickness was set at 0.2 mm, and regarding a shape, a rectangular plate material and a plate material having an L-shaped cross section (see Fig. 8) for use in measurement of strength (tensile stress) were used. Note that the aluminum alloy member and the metal member different from the aluminum alloy that are identical in size and shape to each other were used. On the surface of the metal member, a nickel plating layer with luster formed in the same manner as in Example 1 was used.

Next, laser welding was performed under the following conditions with the arrangement as illustrated in Fig. 7. Specifically, between the aluminum alloy member 71 serving as the upper plate and a copper plate 72 serving as the lower plate that is the metal member different from the aluminum alloy, a gap (73) of 0.2 mm is formed by a spacer (φ10 mm) (not illustrated) made of SUS having a thickness of 0.2 mm. The aluminum alloy member 71 serving as the upper plate was disposed such that a side (upper side of a base member 71a = side on which the laser impinges) opposite from a side to be welded (side facing the copper plate 72) is the nickel plating layer 71b. The copper plate 72 serving as the lower plate was disposed such that a side to be welded is the nickel plating layer with luster (not illustrated).

The gap formed by the spacer is intentionally provided. That is, the gap is generated due to manufacturing variations of each member (range of tolerance). A median value of variations is 0.1 mm and MAX is 0.2 mm between the bus bar and the negative electrode tab of the vehicle-mounted storage battery, the gap was intentionally provided for verification that the gap can be sufficiently filled up by welding. Therefore, although used in this test, such a spacer is not used in actual laser welding. In this test, the spacer was set before welding and removed after welding.

Next, as illustrated in Fig. 7, welding was performed by irradiating the nickel plating layer 71b on the base member 71a of the aluminum alloy member 71 serving as the upper plate with the laser 74 under the following conditions. In practice, instead of the rectangular plate material, a plate material having an L-shaped cross section was disposed such that a portion 81a of an aluminum alloy member 81 bent by 90° extends upward (toward the nickel plating layer side) as illustrated in Fig. 8. On the other hand, a copper plate 82 was disposed such that a portion 82a bent by 90° extends downward (toward the back side that is not welded). A portion where the aluminum alloy member 81 and the copper plate 82 face each other at an interval of 0.2 mm was welded. The obtained welded portion is denoted by reference numeral 83. As a result, as illustrated in Fig. 8, a welded structure 80 was obtained, the welded structure 80 allowing the strength (tensile stress) to be measured by gripping and holding the portion 81a bent by 90° upward of the aluminum alloy member 81 and the portion 82a bent by 90° downward of the copper plate 82, and pulling each portion in a vertical direction (direction of an arrow in Fig. 8).

<Laser welding conditions>

- The nickel plating layer of the upper plate is irradiated with the laser under the following conditions,
- Laser type: YAG laser,
- Welding speed: 100 mm/sec,
- The laser is Wobbling (moves in a circle), and
- The bead length is 21 mm * 2.

With the above-described laser welding, the welded structure (see Fig. 8) of the plate-shaped metal members having an L-shaped cross section and including the welded portion (not illustrated) where the aluminum alloy member 71 and the copper plate 72 that is a metal member different from the aluminum alloy are melted and solidified was obtained.

[Evaluation]

<Measurement of strength (tensile stress) of welded structure>

The strength (tensile stress) of the welded structure of each of the metal members of Examples 1 to 5 and Comparative Examples 1 to 3 was measured using a universal tester, that is an Autograph tensile tester. Specifically, as illustrated in Fig. 8, in the welded structure, the portion 81a bent by 90° upward of the aluminum alloy member 81 and the portion 82a bent by 90° downward of the copper plate 82 were fixed to a jig, and a tensile stress was applied in a separation direction (arrow direction in the drawing). The largest load when break takes place was recorded by the Autograph, and a value obtained by an average of data of N50 (50 samples) - $3\sigma$ was taken as the strength (N). The obtained strength of the welded structure 80 is shown in the following Table 2.

[Table 2]

| | Type of base member of Al alloy member | Type of plating material | Target film thickness of plating film ($\mu$m) | Sa (nm) | Degree of luster of Ni plating layer | Film thickness of Ni plating layer ($\mu$m) | Grain size of Ni grains ($\mu$m) | Strength (N) |
|---|---|---|---|---|---|---|---|---|
| Example 1 | A1100-H24 | Ni plating with dull luster | 3 | 157 | 0.39 | 3.98 | 0.751 | 134.32 |
| Example 2 | A1100-H24 | Ni plating with dull luster | 5 | 186 | 0.33 | 6.25 | 0.663 | 155.39 |
| Example 3 | A1100-H24 | Ni plating with dull luster | 9 | 218 | 0.32 | 10.94 | 0.805 | 203.18 |
| Example 4 | A1100-H24 | Ni plating with dull luster | 10 | 243 | 0.34 | 14.81 | 0.867 | 159.76 |

(continued)

| | Type of base member of Al alloy member | Type of plating material | Target film thickness of plating film (μm) | Sa (nm) | Degree of luster of Ni plating layer | Film thickness of Ni plating layer (μm) | Grain size of Ni grains (μm) | Strength (N) |
|---|---|---|---|---|---|---|---|---|
| Example 5 | A6101-T6 | Ni plating with dull luster | 10 | 221 | 0.38 | 12.91 | 0.939 | 154.83 |
| Comparative example 1 | A1100-H24 | Ni plating with luster | 5 | 74 | 1.39 | 6.38 | 0.088 | 111.00 |
| Comparative example 2 | A1100-H24 | N/A | N/A | - | - | - | - | 88.23 |
| Comparative example 3 | A6101-T6 | N/A | N/A | - | - | - | - | 50.89 |

Reference Signs List

| | |
|---|---|
| 11 | Aluminum alloy |
| 12 | Laser irradiation |
| 13 | Surface reflection |
| 14 | Intended energy |
| 15 | Excessive energy |
| 21 | Surface of nickel plating layer |
| 22 | Laser light |
| 22a | Incident light refracted by and absorbed into plating layer |
| 22b | Reflected light reabsorbed into plating layer |
| 61 | Light source |
| 62 | Light receiver |
| 63 | Specimen |
| 71, 81 | Aluminum alloy member (bus bar) |
| 71a | Base member |
| 71b | Nickel plating layer |
| 72, 82 | Copper plate |
| 73 | Gap |
| 74 | Laser |
| 80 | Welded structure |
| 81a, 82a | Portion bent by 90° |
| 83 | Welded portion |

**Claims**

1. An aluminum alloy member for use in laser welding comprising a nickel plating layer on an aluminum alloy, wherein an arithmetic average roughness Sa of a surface of the nickel plating layer is greater than or equal to 100 nm.

2. The aluminum alloy member for use in laser welding according to claim 1, wherein the arithmetic average roughness Sa of the surface is greater than or equal to 185 nm.

3. The aluminum alloy member for use in laser welding according to claim 1 or 2, wherein a film thickness of the nickel plating layer is greater than or equal to 5 um.

4. The aluminum alloy member for use in laser welding according to claim 3, wherein the film thickness of the nickel plating layer is greater than or equal to 8 um.

5. The aluminum alloy member for use in laser welding according to any one of claims 1 to 4, wherein a film thickness of the nickel plating layer is less than or equal to 14 um.

6. The aluminum alloy member for use in laser welding according to any one of claims 1 to 5, wherein a grain size of nickel grains in the nickel plating layer is greater than or equal to 0.8 um.

7. The aluminum alloy member for use in laser welding according to any one of claims 1 to 6, wherein a degree of luster of the nickel plating layer is less than or equal to 0.38.

8. The aluminum alloy member for use in laser welding according to any one of claims 1 to 7, wherein the aluminum alloy member is to be welded to a member made of a copper alloy.

9. The aluminum alloy member for use in laser welding according to any one of claims 1 to 8, wherein the aluminum alloy member is to be separated from a welding mating member except for a welded portion.

10. A welded structure of a metal member comprising a welded portion where an aluminum alloy member for use in laser welding and a metal member that serves as a welding mating member and is different from the aluminum alloy are melted and solidified, wherein
the aluminum alloy member includes a nickel plating layer on a side opposite from the welded portion, and an arithmetic average roughness Sa of a surface of the nickel plating layer is greater than or equal to 100 nm.

11. The welded structure of a metal member according to claim 10, wherein the aluminum alloy member is separated from the welding mating member except for the welded portion.

12. The welded structure of a metal member according to claim 10 or 11, wherein each of a plurality of the welding mating members includes the welded portion and is welded to the aluminum alloy member.

13. The welded structure of a metal member according to any one of claims 10 to 12, wherein the metal member different from the aluminum alloy is a metal member made of a copper alloy.

14. The welded structure of a metal member according to any one of claims 10 to 13, wherein the aluminum alloy member is a bus bar to be joined to an electrode tab.

15. The welded structure of a metal member according to any one of claims 10 to 14, wherein a type of a laser used for forming the welded portion is a YAG laser.

FIG.1

12

13

14

INCREASE IN
MATERIAL TEMPERATURE

12

15 11

ABSORPTION IS SMALL
AT ROOM TEMPERATURE

ABSORPTION IS LARGE
AT HIGH TEMPERATURE

FIG.2

22 22

22b 22b
21

REABSORPTION OF
REFLECTED LIGHT

22a 22a

REFRACTION OF
INCIDENT LIGHT

FIG.3A

FIG.3B

FIG.3C

PERIPHERAL MASKING

FIG.3D

# FIG.4

Ni PLATING LAYER

Al ALLOY BASE MEMBER

2µm

# FIG.5A

# FIG.5B

FIG.6

FIG.7

FIG.8

## INTERNATIONAL SEARCH REPORT

International application No.

PCT/JP2020/048483

### A. CLASSIFICATION OF SUBJECT MATTER

C25D 5/30(2006.01)i; B23K 26/211(2014.01)i; B23K 26/322(2014.01)i; B23K 26/323(2014.01)i

FI: C25D5/30; B23K26/322; B23K26/323; B23K26/211

According to International Patent Classification (IPC) or to both national classification and IPC

### B. FIELDS SEARCHED

Minimum documentation searched (classification system followed by classification symbols)

C25D5/30; B23K26/211; B23K 26/322; B23K 26/323

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2020/049885 A1 (SUMITOMO ELECTRIC INDUSTRIES, LTD.) 12 March 2020 (2020-03-12) claims, paragraphs [0046]-[0083] | 1-15 |
| Y | US 2018/0190961 A1 (JOHNSON CONTROLS TECHNOLOGY CO.) 05 July 2018 (2018-07-05) claims, paragraphs [0044]-[0058] | 1-15 |
| Y | JP 10-41193 A (NIPPON CHEMI-CON CORPORATION) 13 February 1998 (1998-02-13) claims, paragraphs [0028]-[0030] | 1-15 |
| Y | WO 2010/041461 A1 (PANASONIC CORP.) 15 April 2010 (2010-04-15) paragraphs [0123]-[0141] | 1-15 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 February 2021 (19.02.2021) | 02 March 2021 (02.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2020/048483

| Patent Documents referred in the Report | Publication Date | Patent Family | Publication Date |
|---|---|---|---|
| WO 2020/049885 A1 | 12 Mar. 2020 | (Family: none) | |
| US 2018/0190961 A1 | 05 Jul. 2018 | US 2016/0329542 A1 WO 2016/178726 A1 EP 3292576 A1 CN 107925043 A | |
| JP 10-41193 A | 13 Feb. 1998 | (Family: none) | |
| WO 2010/041461 A1 | 15 Apr. 2010 | JP 2010-93178 A JP 2010-114240 A JP 2010-239111 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019514694 A

**Non-patent literature cited in the description**

- **TAKAYAMA.** Methods for estimation and determination of grain size. *Journal of Japan Institute of Light Metals,* 1994, vol. 44, 48